**Europäisches Patentamt**

**European Patent Office**

**Office européen des brevets**

(19)

(11) Veröffentlichungsnummer: **0 268 045 B1**

(12) **EUROPÄISCHE PATENTSCHRIFT**

(45) Veröffentlichungstag der Patentschrift:
**24.05.89**

(51) Int. Cl.⁴: **B60T 13/66**

(21) Anmeldenummer: **87114264.2**

(22) Anmeldetag: **30.09.87**

(54) Elektropneumatische Bremseinrichtung für Fahrzeuge.

(30) Priorität: **20.11.86 DE 3639527**

(43) Veröffentlichungstag der Anmeldung:
**25.05.88 Patentblatt 88/21**

(45) Bekanntmachung des Hinweises auf die Patenterteilung:
**24.05.89 Patentblatt 89/21**

(84) Benannte Vertragsstaaten:
**DE FR IT NL SE**

(56) Entgegenhaltungen:
**EP-A- 0 234 290**

(73) Patentinhaber: **KNORR-BREMSE AG, Moosacher Strasse 80 Postfach 401060, D-8000 München 40(DE)**

(72) Erfinder: **Vollmer, Otto, Joergstrasse 31, D-8000 München 21(DE)**

## Beschreibung

Die Erfindung betrifft eine elektropneumatische Bremseinrichtung für Fahrzeuge, mit einer Betriebsbremse, umfassend ein mehrkreisiges Betriebsbremsbedienorgan zur über jeweils eine Steuerelektronik und einen dieser nachgeordneten EP-Wandler bewirkbaren, getrennten Steuerung der Druckluftbeaufschlagung entsprechend mehrerer Bremszylinderdruckkreise, mit einer Hilfsbremse, umfassend ein Hilfsbremsbedienorgan zur Steuerung der Druckbeaufschlagung wenigstens eines Federspeicherbremszylinders, und mit einem Zweileitungs-Anhängersteuerventil, das von den mehreren Bremszylinderdruckkreisen und vom Ausgangsdruck eines dem Betriebsbremsbedienorgan zugehörenden, negativen, bei Betätigung ein Absenken seines Ausgangsdruckes bewirkenden Regelventils ansteuerbar ist, wobei die Steuerelektroniken eine Fehlererkennung beinhalten, die bei ihrem Ansprechen durch Schalten eines dem Hilfsbremsbedienorgan vorgeordneten Ventils den Druckluftversorgungsanschluß des Hilfsbremsbedienorgans von einer Regeldruck führenden Druckluftquelle abtrennt und an das Regelventil anschließt.

Eine derartige, elektropneumatische Bremseinrichtung ist der älteren, nicht vorveröffentlichten europäischen Patentanmeldung EP-A 0 234 290 entnehmbar. Bei Betrieb mit einem Anhänger weist diese Bremseinrichtung den Mangel auf, daß beim Betätigen der als Feststellbremse dienenden Hilfsbremse keine "Prüfstellung" einstellbar ist, in welcher zur Kontrolle, ob bei Druckluftverlust im Bremszustand die Hilfsbremse des Zugfahrzeuges allein zum Festhalten des Fahrzeugzuges ausreicht, nur die Hilfsbremse des Zugfahrzeuges bei gelöster Anhängerbremse betätigt ist. Weiterhin ist zu berücksichtigen, daß Anhängersteuerventile üblicher Bauart die Eigenheit aufweisen, bei Ansteuerung von einer Federspeicher-Hilfsbremse erst mit relativ großer Rückhaltung einen Bremsdruck in die Anhängerbremsleitung einzusteuern: Bei einem Lösedruck von beispielsweise 8 bar im Federspeicherbremszylinder muß dieser Druck auf ca. 6,5 bar abgesenkt werden, bevor der Federspeicherbremszylinder anspricht, das Anhängersteuerventil beginnt ebenfalls erst ab dieser Druckabsenkung auf die ca. 6,5 bar in die Anhängerbremsleitung Druckluft einzuspeisen, um so ein gleichmäßiges, aufeinander abgestimmtes Einbremsen des Zugsfahrzeuges und des Anhängers sicherzustellen. Bei der Bremseinrichtung nach der genannten Patentanmeldung ist davon auszugehen, daß die Fahrzeugbeladung über die Steuerelektroniken und die EP-Wandler den Druck in den Bremszylinderdruckkreisen moduliert, d.h. bei unbeladenem Fahrzeug absenkt, in Verbindung mit der vorerwähnten Rückhaltung kann sich hierdurch eine ungenügende Abbremsung des Anhängers ergeben.

Es ist Aufgabe der Erfindung, eine elektropneumatische Bremseinrichtung der eingangs genannten Art derart auszubilden, daß die vorstehend erwähnten Mängel vermieden werden, daß also die bei Anhängerbetrieb erforderliche Kontroll- bzw. Prüffunktion für die Hilfsbremse möglich ist und daß der Anhänger auch bei beispielsweise lastabhängiger oder sonstiger Modulation der von den Steuerelektroniken in die Bremszylinderdruckkreise eingesteuerten Bremsdrücke eine korrekte Abbremsung des Anhängers ergibt.

Diese Aufgabe wird nach der Erfindung dadurch gelöst, daß das Hilfsbremsbedienorgan eine zusätzliche, in die Verbindung vom Regelventil zum Zweileitungs-Anhängersteuerventil eingeordnete Ventileinrichtung aufweist, welche in der Löse- und einer Prüfstellung des Hilfsbremsbedienorgans den Durchgang freigibt, in der Bremsstellung dagegen sperrt und den zum Zweileitungs-Anhängersteuerventil führenden Verbindungsabschnitt entlüftet, und daß das Zweileitungs-Anhängersteuerventil zusätzlich vom den Federspeicherbremszylinder beaufschlagenden Druck zum Inaktivieren einer Rückhalteeinrichtung angesteuert ist.

Nach der weiteren Erfindung vorteilhafte Ausgestaltungen der Bremseinrichtung sind den Merkmalen der Unteransprüche entnehmbar.

In den Zeichnungen ist ein Ausführungsbeispiel für eine nach der Erfindung ausgebildete Bremseinrichtung dargestellt, und zwar zeigt

Fig.1 schematisch den Aufbau der Bremseinrichtung,
Fig.2 ein schematisches Schnittbild durch ein Zweileitungs-Anhängersteuerventil,
Fig.3 ein Druckdiagramm für die Betriebsbremse
Fig.4 ein Druckdiagramm für die Feststellbremse und
Fig.5 eine geänderte Ausführungsform des Hilfsbremsbedienorgans.

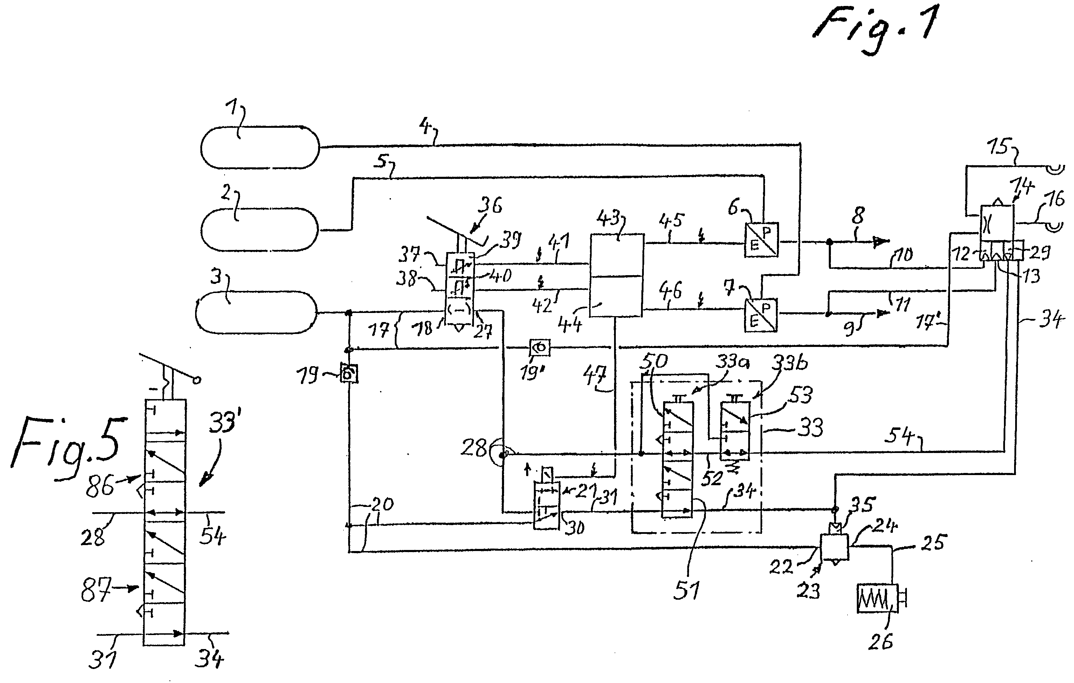

Die elektropneumatische Bremseinrichtung weist gemäß Fig.1 drei gesonderte Luftbehälter 1,2 und 3 auf, welche vermittels eines nichtgezeigten Kompressors und vorzugsweise eines Schutzventils üblicher Bauart mit einer durch einen Druckregler geregelten Regeldruckhöhe aufgeladen werden. Von den beiden Luftbehältern 1 und 2 führen gesonderte Druckluftleitungen 4 und 5 zu den Eingängen zweier EP-Wandler 6 und 7. An den Ausgang des EP-Wandlers 6 sind mittels einer Rohrleitung 8 die nichtdargestellten Vorderachsbremszylinder und an den EP-Wandler 7 mittels einer Rohrleitung 9 die ebenfalls nichtdargestellten Hinterachsbremszylinder des Fahrzeuges angeschlossen. Von den Rohrleitungen 8 und 9 führen Zweigleitungen 10 bzw. 11 zu den Betriebsbremssteuereingängen 12 und 13 eines Anhängersteuerventils 14. Vom Anhängersteuerventil 14 gehen eine Druckluftvorratsleitung 15 und eine Anhängerbremsleitung 16 aus, welche mittels üblicher Kupplungsköpfe mit einer üblichen, nichtdargestellten Zweileitungsbremsanlage eines Anhängers kuppelbar sind.

Vom Luftbehälter 3 führt eine Speiseleitung 17 zum Eingang eines Regelventils 18 und über ein Rückschlagventil 19' als Speiseleitung 17' zum Speiseanschluß des Anhängersteuerventils 14, welcher gegebenenfalls in überlicher Weise überwacht oder auch unmittelbar mit der Druckluftvorratsleitung 15 verbindbar ist. An die Speiseleitung 17 ist über ein in dieser Strömungsrichtung öffnendes Rückschlagventil 19 eine weitere Speiseleitung 20 angeschlossen, welche zu einem Eingang eines 3/2-Wege-Magnetventils 21 und zum Eingangsanschluß 22 eines Relaisventils 23 führt. Der Ausgangsanschluß 24 des Relaisventils 23 steht über eine Rohrleitung 25 mit einem Federspeicherbremszylinder 26in Verbindung, welcher die Reibungsbremse der Hinterachse des Fahrzeuges zu betätigen vermag.

Vom Ausgangsanschluß 27 des Regelventils 18 führt eine Steuerleitung 28 zu einem zweiten Eingang des Magnetventils 21 und zu zwei Teilen 33a und 33b eines Hilfsbremsbedienorgangs 33. Vom Ausgang 30 des Magnetventils 21 führt eine Steuerleitung 31 zu einem weiteren Eingang des Teiles 33a und von letzterem weiter als Steuerleitung 34 zum Steuereingang 35 des Relaisventils 23 und zu einem weiteren Steuereingang des Anhängerventils 14.

Das durch Ruhestrom erregbare Magnetventil 21 verbindet in erregtem Zustand seinen Ausgang 30 mit der Speiseleitung 20, im unerregten Zustand sperrt es diese Verbindung ab und schließt stattdessen seinen Ausgang 30 an die zuvor abgesperrte Steuerleitung 28 an. Das Teil 33a des Hilfsbremsbedienorgans 33 weist zwei manuell gemeinsam schaltbare Ventilteile 50 und 51 auf, welche in unbetätigtem Zustand die Steuerleitung 28 mit einer Leitung 52 und die Steuerleitung 20 mit der Steuerleitung 34, in betätigtem Zustand dagegen unter Absperren dieser Verbindungen sowohl die Leitungen 52 wie die Steuerleitung 34 in die Atmosphäre entlüften. Das Teil 33b des Hilfsbremsbedienorgans 33 beinhaltet ein Ventilteil 53, welches getrennt von den Ventilteilen 50 und 51 betätigbar ist und welches im unbetätigtem Zustand eine von ihm ausgehende Steuerleitung 54 mit der Leitung 52, im betätigten Zustand dagegen mit der Steuerleitung 28 verbindet. Die Steuerleitung 54 führt zu einem Steuereingang 29 des Anhängersteuerventils 14.

Das Regelventil 18 gehört einem elektrischen, zweikreisigen Betriebsbremsbedienorgan 36 zu, welches aus einer nichtgezeigten Stromversorgung über Kabel 37 bzw. 38 mit elektrischer Energie versorgt wird, zwei getrennte, elektrische Regelglieder 39 und 40 beinhaltet und durch zwei Steuerkabel 41 und 42 seiner jeweiligen Betätigungsstärke entsprechende, elektrische Steuersignale zwei Steuerelektroniken 43 bzw. 44 zuführt. Das Regelventil 18 weist eine negative Steuercharakteristik auf, im unbetätigten Zustand des Betriebsbremsbedienorgans 36 speist es also in seinen Ausgangsanschluß 27 Regeldruckhöhe ein, bei Betätigung dagegen vermindert es den ausgesteuerten Druck entsprechend seiner Betätigungsstärke. Die gegebenenfalls zu einer Baueinheit zusammengefaßten, beiden Steuerelektroniken 43 und 44 verarbeiten die ihnen durch die Steuerkabel 41 bzw. 42 zugeführten Signale, gegebenenfalls unter Abänderung durch weitere, ihnen zugeführte Steuergrößen, die beispielsweise den Achsbelastungen des Fahrzeuges, Verzögerungen des Fahrzeuges und/oder Fahrzeugradgleitvorgängen entsprechen können, zu elektrischen Ausgangssignalen, die durch Steuerkabel 45 bzw. 46 den EP-Wandlern 6 und 7 zugeführt werden, welche in die Rohrleitungen 8 und 9 entsprechende Bremsdruckhöhen einspeisen. Von den durch eine nichtgezeigte Einrichtung mit elektrischer Energie versorgten Steuerelektroniken 43 und 44 führt ein Kabel 47 zur andererseits an eine Rückführung angeschlossenen Erregungsspule des Magnetventils 21; bei betriebsbereiter, in Ordnung befindlicher Betriebsbremssteuerung führt das Kabel 47 Strom und das Magnetventil 21 ist somit erregt. Die Betriebsbereitschaft der Betriebsbremssteuerung kann beispielsweise durch in die Rohrleitungen 8 und 9 eingeordnete, nichtdargestellte Druckwandler zum Rückmelden der in diese Rohrleitungen ausgesteuerten Drücke mittels entsprechender Signale zu den Steuerelektroniken 43 und 44 feststellbar sein. Bei Auftreten eines Fehlers in der Betriebsbremsanlage springt eine in den Steuerelektroniken 43 und 44 integrierte Fehlererkennung an und trennt das Kabel 47 von seiner Stromversorgung ab, so daß das Magnetventil 21 abfällt.

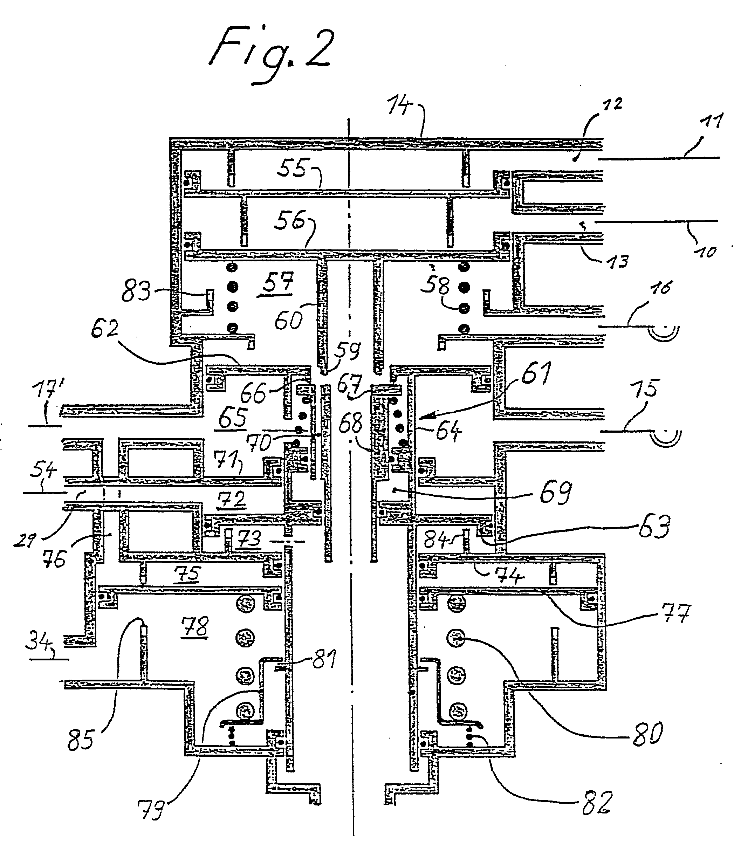

Das Anhängersteuerventil 14 weist gemäß Fig.2 einen Steuerkolben 55, der über die beiden Zweigleitungen 10 und 11 und damit von den beiden Bremszylinderdruckkreisen des Triebfahrzeuges beaufschlagt ist, und einen Steuerkolben 56 auf, der über die Zweigleitung 10 vom Druck im Hinterachsbremskreis entgegen dem Druck im Innenraum 57, der an die Anhängerbremsleitung 16 angeschlossen ist, und der Kraft einer Feder 58 belastet ist. Der Steuerkolben 56 trägt seitens des Raumes 57 ein mit einem Ventilsitz 59 endendes, andererseits geschlossenes Ventilrohr 60. Weiterhin ist ein Kolbensystem 61 vorgesehen, welches zwei ringförmige Kolben 62 und 63 umfaßt, die durch einen Rohrkörper 64 miteinander verbunden sind. Der Kolben 62 trennt den Raum 57 von einem Raum 65 ab, der mit der Druckluftvorratsleitung 15 sowie der Speiseleitung 17' in Verbindung steht. Radial innen endet der Kolben 62 innerhalb des Rohrkörpers 64 mit einem einwärts gerichteten Ventilsitz 66, in welchen der Ventilsitz 59 mit radialem Spiel einzugreifen vermag. Den beiden Ventilsitzen 59 und 66 steht eine federbelastete, ringförmige Doppeldichtung 67 gegenüber, welche ventilsitzabgewandt mittels eines im Durchmesser abgestuften Rohres 68 an beiden Durchmesserbereichen zum Rohrkörper 64 abgedichtet verschieblich geführt ist. Die beiden Durchmesserbereiche des Rohres 68 entsprechen den Durchmessern der Ventilsitze 59 und 60, der Zwischenraum 69 zwischen den beiden abgedichteten Führungen steht zur pneumatischen Entlastung der Doppeldichtung 67 durch eine exentrische Längsbohrung 70 mit dem Ringraum zwischen beiden Ventilsitzen 59 und 60 in Verbindung. Der Raum 65 ist durch eine abgedichtet verschieblich vom Rohrkörper 64 durchsetzte Gehäusetrennwand 71 von einem Raum 72 abgetrennt, welcher durch den Hilfsbremssteuereingang 29 an die Steuerleitung 54 angeschlossen ist. Der Kolben 63 trennt den Raum 72 von einem Raum 73 ab, der ständig durch eine Querbohrung des Rohrkörpers 64 mit dem in letzteren und im Rohr 68 sowie im Ventilrohr 60 herrschenden Atmosphärendruck beaufschlagt ist. Der Raum 73 ist durch eine vom Rohrkörper 64 abgedichtet verschieblich durchbrochene Gehäusetrennwand 74 von einem Raum 75 abgetrennt, der durch einen Kanal 76 mit dem Raum 65 in Verbindung steht. Der Raum 75 ist durch einen auf dem Rohrkörper 64 abgedichtet verschieblich geführten, ringförmigen Rückhaltekolben 77 von einem Raum 78 abgetrennt, in welchen die Steuerleitung 34 einmündet. Im Raum 78 befindet sich zwischen dem Kolben 77 und einem ringförmigen, auf dem Rohrkörper 67 verschieblichen Federteller 79 eine Feder 80; der Federteller 79 ist durch einen Anschlag 81 mit dem Rohrkörper 64 kuppelbar. Eine schwache Feder 82 belastet den Federteller 79 in Öffnungsrichtung des Anschlages 81 und entgegen der Feder 80. Der Rohrkörper 64 ragt aus dem Raum 78 abgedichtet verschieblich ins Freie und endet dort offen.

Die Kolben 55 und 56 sind gegeneinander abstützbar, sie weisen gleiche Größe auf und sind größer als die Kolben 62 und 63. Ein Gehäuseanschlag 83 vermag den Kolben 56 ventilsitzseitig abzufangen. Ein weiterer Gehäuseanschlag 84 vermag das Kolbensystem 61 in Entfernungsrichtung vom Kolben 56 abzufangen. Ein dritter Gehäuseanschlag 85 fängt den Rückhaltekolben 77, der im Vergleich zu den übrigen Kolben den größten Durchmesser aufweist, seitens des Raumes 78 ab.

Die Kolbenflächen des Anhängersteuerventils 14 sind derart bemessen, daß bei gleichem Druck in den Räumen 65 und 72 das Kolbensystem 61 auf dem Gehäuseanschlag 84 mit schwacher Kraft aufsitzt. Beim Beaufschlagen der Steuerkolben 55 und/oder 56 durch wenigstens eine der Zweigleitungen 10 und/oder 11 wird nach geringer Ansprechverzögerung durch die Feder 58 das Ventilteil 59,67 geschlossen und das Ventilteil 66,67 geöffnet, so daß aus dem Raum 65 in den Raum 57 Druckluft bis zum Aufbau eines entsprechenden Druckes einströmen kann. Ebenso sind die wirksamen Flächen der Kolben 62 und 63 derart abgestimmt, daß bei Druckabsenkung im Raum 72 das Kolbensystem 61 zum nahezu rückhaltefreien Offnen des Ventilteiles 66,67 angehoben wird. Der Kolben 77 schließlich weist eine derartige Fläche auf, daß er bereits bei einem kleinen Druckabfall von beispielsweise 0,3 bar im Raum 78 unter den im Raum 75 herrschenden Druck die zuvor entspannte Feder 80 spannt und sich auf den Gehäuseanschlag 85 aufsetzt. Der Federteller 79 wird dabei über den Anschlag 81 mit dem Kolbensystem 61 gekoppelt und belastet dieses in Aufsetzrichtung auf den Gehäuseanschlag 84.

Bei betriebsbereiter, in Ordnung befindlicher Bremseinrichtung befindet sich diese in der aus Fig.1 und 2 ersichtlichen Lage, wobei das unbetätigte Betriebsbremsbedienorgan 36 über die Steuerelektroniken 43 und 44 sowie die EP-Wandler 6 und 7 die Rohrleitungen 8 und 9 drucklos und damit die Steuerkolben 55 und 56 im Anhängersteuerventil 14 unbeaufschlagt hält. Das Ventilteil 59,67 ist geöffnet und die Anhängerbremsleitung 16 durch den Rohrkörper 64 zur Atmosphäre entlüftet. Das Regelventil 18 steuert in die Steuerleitungen 28 Regeldruckhöhe ein, welche durch das insgesamt unbetätigte Hilfsbremsbedienorgan 33 zur Steuerleitung 54 und damit in den Raum 72 gelangt. Zugleich gelangt aus der Speiseleitung 20 durch das Magnetventil 21 sowie die Steuerleitung 31 und das Hilfsbremsbedienorgan 33 Regeldruckhöhe in die Steuerleitung 34, wodurch das Relaisventil 22 Regeldruckhöhe in den Federspeicherbremszylinder 26 einsteuert und auch im Raum 78 des Anhängersteuerventils 14 Regeldruckhöhe herrscht. Durch die Speiseleitung 17,17' gelangt Regeldruckhöhe auch in die Räume 65 und 75 des Anhängersteuerventils 14 sowie zur Druckluftvorratsleitung 15.

Bei Betätigen des Betriebsbremsbedienorgans 36 werden in die Rohrleitungen 8 und 9 der Betätigungsstärke entsprechende Druckhöhen eingespeist, so daß das Zugfahrzeug entsprechend gebremst wird. Die gleichzeitige Betätigung des Regelventils 18 senkt die in den Steuerleitungen 28 und 54 anstehende Regeldruckhöhe entsprechend ab, so daß durch Druckabsenkung im Raum 72 das Anhängersteuerventil 14 durch Anheben des Kolbensystems 61 zum Umsteuern und Einspeisen einer entsprechenden Druckhöhe in den Raum 57 und die Anhängerbremsleitung 16 angeregt wird. Der Anhänger wird damit entspechend dem Zugfahrzeug abgebremst. Gleichzeitig erfolgt eine gegebenenfalls durch fahrzeuglastabhängige oder sonstige Modulation abgeschwächte Druckbeaufschlagung 55 und 56 durch die von den Steuerelektroniken 43 und 44 überwachten Betriebsbremskreise; infolge der zumindest gleich hohen Druckbeaufschlagung des Raumes 57 verbleiben die Steuerkolben 55 und 56 jedoch in ihrer dargestellten, oberen Endstellung. Über das Magnetventil 21 und das Hilfsbremsbedienorgan 33 verbleibt die Steuerleitung 34 mit der Speiseleitung 20 verbunden, so daß der Raum 78 und über das Relaisventil 23 der Federspeicherbremszylinder 26 mit Regeldruckhöhe beaufschlagt bleiben.

Es ergibt sich somit bei Betriebsbremsung eine Druckeinsteuerung in die Anhängerbremsleitung 16 gemäß Kurve II des Diagrammes nach Fig.4, in welchem der Druck A in der Anhängerbremsleitung 16 über dem Druck C in der Steuerleitung 54 und damit dem Hilfsbremssteuereingang 29 des Anhängersteuerventils 14 aufgetragen ist: ausgehend von gelösten Bremsen und einer Regeldruckhöhe von beispielsweise 8 bar in der Steuerleitung 54 und Null bar in der Anhängerbremsleitung 16 ergibt sich ein der Betätigungsstärke des Betriebsbremsbedienorgans 36 entsprechendes Absenken des Druckes in der Steuerleitung 54 und eine entsprechend umgekehrt ansteigende Druckbeaufschlagung der Anhängerbremsleitung 16 gemäß Kurve II, also ohne Ansprechrückhaltung.

Zum Betätigen der Hilfsbremse ist das Teil 33a des Hilfsbremsbedienorgans 33 umzuschalten, wodurch die Steuerleitungen 34 und 54 entlüftet werden. Über das Relaisventil 23 erfolgt eine entsprechende Entlüftung des Federspeicherbremszylinders 26, so daß dieser nach Unterschreiten einer gewissen Beaufschlagungshöhe die Hinterachsbremse des Zugfahrzeuges zuspannt; die Ansprechschwelle des Federspeicherbremszylinders 26 liegt beispielsweise ca. 1,5 bar unter der Regeldruckhöhe, so daß er, ausgehend von einer Regeldruckhöhe von 8 bar bei Unterschreiten eines Beaufschlagungsdruckes von ca. 6,5 bar anzusprechen beginnt. Zugleich werden im Anhängersteuerventil 14 die Räume 72 und 78 entlüftet. Der großflächige Rückhaltekolben 77 verbleibt im Raum 75 mit Regeldruckhöhe beaufschlagt, er senkt sich bei Erreichen einer geringen Druckdifferenz von beispielsweise 0,3 bar zwischen den Räumen 75 und 78 bis zum Aufliegen auf dem Gehäuseanschlag 85 ab, spannt dabei die Feder 80 und belastet mit deren Kraft über den sich schließenden Anschlag 81 das Kolbensystem 61 in Richtung nach unten. Das Kolbensystem 61 kann sich also unter der verbleibenden Regeldruckbeaufschlagung des Kolbens 62 durch den Raum 65 und der sich vermindernden Druckbelastung des Kolbens 63 durch den Raum 72 erst dann anheben, wenn die Vorbelastung durch die Feder 80 überwunden wird; hierzu ist eine dem Erreichen der Ansprechschwelle des Federspeicherbremszylinders 26 wenigstens annähernd entsprechende Druckabsenkung im Raum 72 nötig. Das Kolbensystem 61 hebt sich bei weiterer Drucksenkung im Raum 72 an und bewirkt ein dieser weiteren Druckabsenkung entsprechendes Einsteuern von Druckluft durch das sich öffnende Ventilteil 66,67 in den Raum 57 und damit die Anhängerbremsleitung 16. Es ergibt sich somit ein Druckdiagramm entsprechen der Linie III in Fig.4, in welcher wie bereits erwähnt, der in der Anhängerbremsleitung 16 herrschende Druck A über dem Druck C in der Steuerleitung 54 und damit im Hilfsbremssteuereingang 29 des Anhängersteuerventils 14 aufgetragen ist. Es ist zu ersehen, daß, ausgehend von einer Regeldruckhöhe von beispielsweise 8 bar, der Druck in der Steuerleitung 54 um ca. 1,5 bar auf etwa 6,5 bar, also den Ansprechschwellenwert des Federspeicherbremszylinders 26, abgesenkt werden muß, bevor das Anhängersteuerventil 14 in die Anhängerbremsleitung 16 einen Druck einzuspeisen beginnt. Bei weiterer Druckabsenkung in der Steuerleitung 54 erfolgt eine entsprechende Drucksteigerung in der Anhängerbremsleitung 16. Insgesamt ergibt sich somit, daß der Anhänger entsprechend dem Zugfahrzeug abgebremst wird.

Um zu kontrollieren, ob bei einem beispielsweise in einer Steigung mit betätigter Hilfsbremse abgestellten Kraftfahrzeugzug die Hilfsbremse des Zugfahrzeuges ausreicht, den Kraftfahrzeugzug auch bei Druckluftverlust und damit sich allmählich lösender Anhängerbremse festzuhalten, ist zusätzlich zum Teil 33a das Teil 33b des Hilfsbremsbedienorgans 33 vorübergehend zu betätigen; hierdurch wird die Steuerleitung 54 für die Betätigungszeit des Teiles 33b unter Umgehen des Teiles 33a an die durch das unbetätigte Regelventil 18 Regeldruckhöhe führende Steuerleitung 28 angeschlossen und somit vorübergehend mit Regeldruckhöhe beaufschlagt. Im Anhängersteuerventil 14 ergibt sich hierdurch eine vorübergehende Druckbeaufschlagung des Raumes 72 mit Regeldruckhöhe, wodurch das Kolbensystem 61 das Ventilteil 59,67 zum Entlüften des Raumes 57 und der Anhängerbremsleitung 16 öffnet. Die Anhängerbremse wird also für die Betätigungszeit des Teiles 33b gelöst und während dieser Lösezeit ist zu prüfen, ob der Kraftfahrzeugzug durch den weiterhin betätigten Federspeicherbremszylinder 26 festgehalten wird. Nach dieser als Prüfstellung zu bezeichnenden, zeitweisen Betätigung des Teiles 33b wird die Anhängerbremse durch Entlüften der Steuerleitung 54 wieder eingebremst.

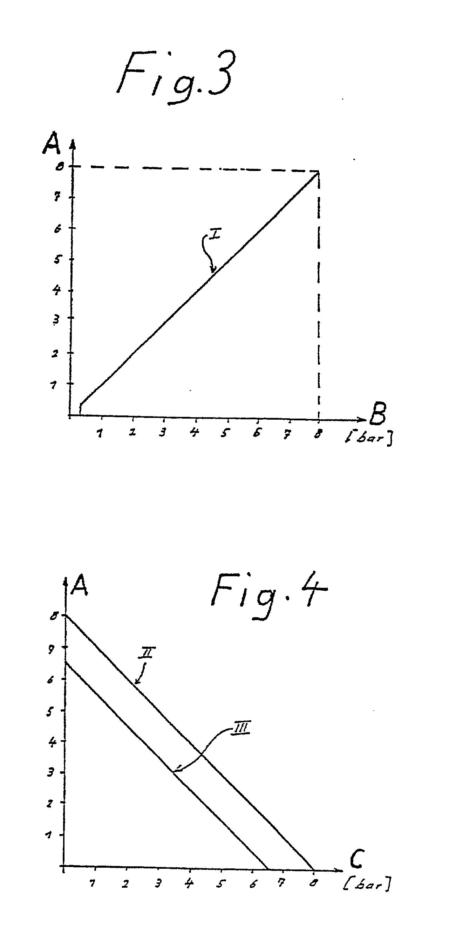

Fällt bei gelöstem Bremsen die elektrische Bremssteuerung aus, so wird das Magnetventil 21 entregt und schaltet um; dies bleibt jedoch vorerst ohne weitere Auswirkung. Beim nachfolgenden Betätigen der Hilfsbremsen spielen sich die vorstehend zum Betätigen des Hilfsbremsbedienorgans 33 erwähnten Vorgänge ab. Wird nachfolgend jedoch das Betriebsbremsorgan 36 betätigt, so erfolgt nunmehr durch das geschaltete Magnetventil 21 ein Entlüften der Steuerleitung 34 entsprechend der Betätigungsstärke des Betriebsbremsorgans 36, wodurch über das Relaisventil 23 eine entsprechende Entlüftung des Federspeicherbremszylinders 26 und damit eine Betätigung der Hilfsbremse des Zugfahrzeuges bewirkt wird. Für das Anhängersteuerventil 14 ergibt sich eine Situation wie während einer Hilfsbremsung des Zugfahrzeuges, es spielen sich dort entsprechende Vorgänge ab und in die Anhängerbremsleitung 16 wird ein Druck entsprechend Kurve III in Fig.4 eingespeist. Sollte nur ein Teilschaden in der Steuerelektronik vorliegen, so daß wenigstens einer der Betriebsbremskreise korrekt druckbeaufschlagt wird, so bewirkt diese Druckbeaufschlagung bei nur schwacher oder fehlender Modulation eine gegenüber der Kurve III verbesserte Ansteuerung der Anhängerbremse: Die der Betätigungsstärke des Betriebsbremsbedienorgans 36 voll entsprechende Beaufschlagung eines oder beider Betriebsbremssteuereingänge 12 und/oder 13 des Anhängersteuerventils 14 veranlaßt den Steuerkolben 56 und gegebenenfalls den Steuerkolben 55 zur Absenkung entgegen dem entsprechend Kurve III niedrigeren Druck im Raum 57, bis durch Betätigen des Ventiles 66,67 in den Raum 57 und damit die Anhängerbremsleitung 16 eine entsprechende Druckhöhe eingesteuert ist. Für den Anhänger ergibt sich somit eine Drucksteuerung gemäß Kurve I des Diagrammes nach Fig.3, in welcher der in der Anhängerbremsleitung 16 herrschende Druck A über dem unmodulierten Druck B in den Betriebsbremskreisen bei vollbeladenem Zugfahrzeug aufgetragen ist. Man erkennt, daß nach einer nur geringen Ansprungverzögerung die Drücke gleichmäßig anwachsen. Die Anhängerbremssteuerung erfolgt also voll entsprechend der Betriebsbremsbetätigung des Zugfahrzeuges ohne Rückhaltung. Dies ist besonders wesentlich, falls die elektrische Bremssteuerung lediglich für die Hinterachse ausfällt, da das Zugfahrzeug dann an seiner Vorderachse voll betriebsgebremst, an seiner Hinterachse hilfsgebremst und der Anhänger nonaal abgebremst wird.

Die Teile 33a und 33b des Hilfsbremsbedienorgans 33 können zu einem nur eine Betätigungseinrichtung aufweisenden Organ, dem Hilfsbremsbedienorgan 33' gemäß Fig.5, zusammengefaßt werden. Nach Fig.5 weist das Betriebsbremsbedienorgan 33' zwei gemeinsam in eine Löse-, eine Brems- und eine Prüfstellung schaltbare Ventilteile 86 und 87 auf, wobei das Ventilteil 86 zwischen die Steuerleitungen 28 und 54 und das Ventilteil 87 zwischen die Steuerleitungen 31 und 34 gemäß Fig.1 einzuordnen ist. Die Ventilteile 86 und 87 sind dabei derart ausgebildet, daß sie in der Lösestellung jeweils eine Verbindung zwischen den an sie angeschlossenen Steuerleitungen freigeben, in der Bremsstellung dagegen diese Verbindung sperren und die Steuerleitung 54 bzw. 34 entlüften. In der Prüfstellung hält das Ventilteil 87 die Steuerleitung 34 entlüftet, während das Ventilteil 86 die Steuerleitungen 28 und 54 wiederum miteinander verbindet. Es ergibt sich damit die vorstehend zu Fig.1 beschriebene Funktionsweise.

Die Hilfsbremsbedienorgane 33 und 33' sind gemäß vorstehender Beschreibung und den Figuren 1 und 5 derart ausgebildet, daß sie in der Bremsstellung kein gestuftes Entlüften der Steuerleitungen 34 und 54 ermöglichen. Hierdurch ergibt sich eine besonders einfache Ausbildung des Hilfsbremsbedienorgans 33 bzw. 33', wobei die Funktionsweise den in dieser elektrischen Bremseinrichtung an die Hilfsbremse zu stellenden Anforderungen genügt. Selbstverständlich ist es jedoch möglich, die Hilfsbremsbedienorgane derart auszubilden, daß sie einen Bremsstellungsbereich aufweisen, in welchem wie bei Handbremsventilen üblich der Druck in den Steuerleitungen 34 und 54 stellungsabhängig, d.h. in Abhängigkeit von der jeweiligen Einstellung des Bedienungshebels abgesenkt wird. Vereinfachend kann jedoch auch lediglich eine Abschlußstellung vorgesehen werden, in welcher die Steuerleitungen 34 und 54 abgesperrt werden, so daß eine betätigungszeitabhängige Steuerung der Druckabsenkung in den Steuerleitungen 34 und 54 möglich ist.

**Patentansprüche**

1. Elektropneumatische Bremseinrichtung für Fahrzeuge, mit einer Betriebsbremse, umfassend ein mehrkreisiges Betriebsbremsbedienorgan (36) zur über jeweils eine Steuerelektronik (43,44) und einen dieser nachgeordneten EP-Wandler (6,7) bewirkbaren, getrennten Steuerung der Druckluftbeaufschlagung entsprechend mehrerer Bremszylinderdruckkreise (8,9), mit einer Hilfsbremse, umfassend ein Hilfsbremsbedienorgan (33,33') zur Steuerung der Druckbeaufschlagung wenigstens eines Federspeicherbremszylinders (26), und mit einem Zweileitungs-Anhängersteuerventil (14), das von den mehreren Bremszylinderdruckkreisen (8,9) und vom Ausgangsdruck eines dem Betriebsbremsbedienorgan (36) zugehörenden, bei Betätigen ein Absenken seines Ausgangsdruckes bewirkenden Regelventils (27) ansteuerbar ist, wobei die Steuerelektroniken (43,44) eine Fehlererkennung beinhalten, die bei ihrem Ansprechen durch Schalten eines dem Hilfsbremsbedienorgan (33,33') vorgeordneten Ventils (21) einen Druckluftversorgungsanschluß des Hilfsbremsdienorgans (33,33') von einer Regeldruck führenden Druckluftquelle (3) abtrennt und an das Regelventil (18) anschließt, dadurch gekennzeichnet, daß das Hilfsbremsbedienorgan (33,33') eine zusätzliche, in die Verbindung (28,54) vom Regelventil (18) zum Zweileitungs-Anhängersteuerventil (14) eingeordnete Ventileinrichtung (50,53,86) aufweist, welche in der Löse-

und einer Prüfstellung des Hilfsbremsbedienorgans (33,33') den Durchgang freigibt, in der Bremsstellung dagegen sperrt und den zum Zweileitungs-Anhängersteuerventil (14) führenden Verbindungsabschnitt (54) entlüftet, und daß das Zweileitungs-Anhängersteuerventil (14) zusätzlich vom den Federspeicherbremszylinder (26) beaufschlagenden Druck zum Inaktivieren einer Rückhalteeinrichtung (Feder 80) angesteuert ist.

2. Bremseinrichtung nach Anspruch 1, dadurch gekennzeichnet, daß das Hilfsbremsbedienorgan (33) zwei manuell gemeinsam schaltbare, erste Ventilteile (50,51) zum Steuern der Druckbeaufschlagung des Verbindungsabschnittes (54) und des Federspeicherbremszylinders (26) und ein getrennt manuell schaltbares, zweites Ventilteil (53) aufweist, welches in den Verbindungsabschnitt (54) eingeordnet ist und diesen entweder mit dem ihm zugeordneten, ersten Ventilteil (50) oder unter dessen Überbrückung unmittelbar mit dem Regelventil (18) verbindet.

3. Bremseinrichtung nach Anspruch 1, dadurch gekennzeichnet, daß das Hilfsbremsbedienorgan (33') zwei manuell gemeinsam in die Löse-, Brems- und Prüfstellung schaltbare Ventilteile (86,87) zum Steuern der Druckbeaufschlagung des Verbindungsabschnittes (54) und des Federspeicherbremszylinders (26) aufweist, die in der Lösestellung einen Durchgang zur jeweiligen Druckluftversorgung freigeben, in der Bremsstellung sperren und den Verbindungsabschnitt (54) bzw. den Federspeicherbremszylinder (26) entlüften und in der Prüfstellung mittels eines Ventilteiles (86) den Durchgang von der Druckluftversorgung zum Verbindungsabschnitt (54) wieder freigeben und mittels des anderen Ventilteiles (87) den Federspeicherbremszylinder (26) entlüftet halten.

4. Bremseinrichtung nach Anspruch 1, wobei das Zweileitungs-Anhängersteuerventil (14) von den Bremszylinderdruckkreisen (8,9) beaufschlagte Steuerkolben (55,56) und ein vom Druck der Druckluftquelle (3) entgegen einem vom Hilfsbremsbedienorgan (33,33') ausgesteuerten Druck und dem Druck in einer Anhängerbremsleitung (16) beaufschlagtes Kolbensystem (61) zum Betätigen eines den Druck in der Anhängerbremsleitung (16) steuernden Ventils (59,66,67) aufweist, dadurch gekennzeichnet, daß ein vom Druck der Druckluftquelle (3) entgegen dem Druck im Federspeicherbremszylinder (26) beaufschlagter Rückhaltekolben (77) vorgesehen ist, der bei überwiegender, erstgenannter Beaufschlagung eine das Ventil (59,66,67) in Schaltrichtung zum Entlüften der Anhängerbremsleitung (16) belastende Feder (80) spannt.

5. Bremseinrichtung nach Anspruch 4, dadurch gekennzeichnet, daß die Feder (80) zwischen den Rückhaltekolben (77) und einen durch einen Anschlag (81) mit dem Kolbensystem (61) kuppelbaren Federteller (79) eingeordnet ist.

6. Bremseinrichtung nach Anspruch 5, dadurch gekennzeichnet, daß der Anschlag (81) von einer bezogen auf die Feder (80) schwachen Abhebefeder(82) belastet ist.

## Claims

1. Electropneumatic braking device for vehicles, comprising a service brake, with a multiple-circuit service brake actuating device (36) for separate control of pressurization, being capable of being performed by means of an electropneumatic control unit (43, 44) each and an electropneumatic converter (6, 7), mounted downstream of the latter, of a corresponding number of brake cylinder pressure circuits, comprising a secondary brake with a secondary brake actuating device (33; 33') for control of pressurization of at least one spring-loaded brake cylinder (26) and comprising a two-line trailer control valve (14), capable of being controlled by the various brake cylinder pressure circuits (8, 9) and by the initial pressure of a control valve (27), pertaining to the service brake actuating device (36), and, when being actuated, performing a reduction of its initial pressure, the electronic control units (43, 44) comprising an error detecting feature which, when responding, isolates, by switching a valve (21) mounted upstream of the secondary brake actuating device (33; 33'), a compressed air supply port of the secondary brake actuating device (33; 33') from a compressed air source (3) having a controlled pressure level, connecting said supply port to the control valve (18), wherein the secondary brake device (33; 33') comprises an additional valve means (50; 53; 86) arranged in the line (28, 54), leading from the control valve (18) to the two-line trailer control valve (14), said valve means (50; 53; 86), when the secondary brake actuating device (33; 33') is in release or testing position, opening the passage, whereas, when being in brake application position, shutting off said passage and venting the line section (54) leading to the two-line trailer control valve (14), and wherein the two-line trailer control valve is subject, in addition, to the pressure applied to the spring-loaded brake cylinder (26), to inactivate a retaining device (spring 80).

2. Braking device according to Claim 1, wherein the secondary brake actuating device (33) is provided with two first valve portions (50, 51), which can be manually actuated together, for control of pressurization of the line section (54) and of the spring-loaded brake cylinder (26), and a second valve portion (53), which can be manually actuated separately, arranged in the line section (54) and connecting the latter with the first valve portion (50) associated to it or, bypassing said first valve portion (50), directly with the control valve (18).

3. Braking device according to Claim 1, wherein the secondary brake actuating device (33') is provided with two valve portions (86, 87), capable of being switched jointly into the release, application or testing position for control of pressurization of the line section (54) and of the spring-loaded brake cylinder (26), said two valve portions (86, 87) when being in release position, opening a passage to the respective air supply source, when being in brake application position, shutting off said passage, venting the line section (54) and the spring-loaded brake cylinder (26) and, when being in testing position, reopening the passage from the air supply source to the line section (54), by means of one valve portion (86), while maintaining the spring-loaded brake cylinder (26) unpressurized, by means of the other valve portion (87).

4. Braking device according to Claim 1, comprising a two-line trailer control valve (14) with control pistons (55, 56), being pressurized by the brake cylinder pressure circuits (8, 9), and a piston system (61), being loaded by the pressure of the compressed air source (3), counteracting the output pressure of the secondary brake actuating device (33; 33') and the pressure in a trailer brake line (16), for the actuation of a valve (59, 66, 67) controlling the pressure in the trailer brake line (16), wherein a retaining piston (77), loaded by the pressure of the compressed air source (3), counteracting the pressure in the spring-loaded brake cylinder (26), has been provided, said retaining piston, when predominantly being loaded by the former pressure, compressing a spring (80) that forces a valve (59, 66, 67) in actuating direction for venting of the trailer brake line (16).

5. Braking device according to Claim 4, wherein the spring is arranged between the retaining piston (77) and a spring plate (79), capable of being linked with the piston system (61) by means of a limit stop (81).

6. Braking device according to Claim 5, wherein the limit stop (81) is loaded by a light lifting spring (82), relative to the spring (80).

## Revendications

1. Installation électro-pneumatique de freinage pour des véhicules, avec un frein de service, comportant un organe de commande, à circuits multiples, de frein de service (36), pour la commande séparée de la charge en air comprimé de plusieurs circuits d'air comprimé correspondants (8, 9) pour des cylindres de frein, susceptibles d'être actionnés chacun par l'intermédiaire d'une électronique de commande (43, 44) et d'un transducteur électropneumatique (6, 7) monté en aval de cette dernière, avec un frein auxiliaire comportant un organe de commande (33; 33') du frein auxiliaire pour la commande de la charge en air comprimé d'au moins un cylindre de frein à ressort accumulateur (26), et avec une soupape de remorque (14) à deux conduites, qui est susceptible d'être commandée par lesdits plusieurs circuits d'air comprimé des cylindres de frein (8, 9) et par la pression initiale d'une soupape de réglage (27) qui appartient à l'organe de commande (36) du frein de service et qui provoque, lors de sa commande, une chute de sa pression initiale, lesdites électroniques de commande (43, 44) comportant un dispositif d'identification d'erreurs qui, lors de sa sollicitation, et par la commutation d'une soupape (21) montée en amont de l'organe de commande du frein auxiliaire (33; 33'), sépare un raccord d'alimentation en air comprimé de l'organe de commande du frein auxiliaire (33; 33') d'une source d'air comprimé (3) dans laquelle règne la pression de réglage et le relie à la soupape de réglage (18), caractérisée par le fait que l'organe de commande (33; 33') du frein auxiliaire comporte un dispositif à soupapes supplémentaire (50; 53; 86), monté dans la liaison (28, 54) menant de la soupape de réglage (18) à la soupape de commande (14), à deux conduites, de la remorque, ledit dispositif à soupapes supplémentaire dégageant le passage lorsque l'organe de commande (33; 33') du frein auxiliaire est dans sa position de desserrage et dans une position de contrôle, mais interrompant le libre passage dans la position de freinage et reliant à l'atmosphère la soupape de commande (14), à deux conduites, de la remorque, et que cette soupape de commande (14) est de plus susceptible d'être commandée par la pression qui charge le cylindre de frein à ressort accumulateur (26), en vue de désactiver un dispositif de retenue (ressort (80).

2. Installation de freinage selon la revendication 1, caractérisée par le fait que l'organe de commande (33) du frein auxiliaire comporte deux premiers éléments de soupapes (50, 51) commutables manuellement et en commun, en vue de commander la charge en pression de la section de liaison (54) et du cylindre de frein à ressort accumulateur (26), et un second élément à soupapes (53) susceptible d'être commandé manuellement et séparément, ledit second élément à soupapes étant monté dans la section de liaison (54) et reliant cette dernière soit avec le premier élément à soupapes (50) qui lui est associé, soit directement avec la soupape de réglage (18), en contournant ce dernier.

3. Installation de freinage selon la revendication 1, caractérisée par le fait que l'organe de commande (33') du frein auxiliaire comporte deux éléments à soupapes (86, 87) qui sont susceptibles d'être commutés manuellement et en commun dans la position de desserrage, de freinage et de contrôle, en vue de contrôler la charge en pression de la section de liaison (54) et du cylindre de frein à ressort accumulateur (26), qui dégagent, dans la position de desserrage, un passage menant à l'alimentation concernée en air comprimé, qui provoquent l'obturation dans la position de freinage et mettent à l'atmosphère la section de liaison (54) pour le cylindre de frein à ressort accumulateur (26), et qui, à l'aide d'un élément à soupapes (86), dégagent à nouveau le passage menant de l'alimentation en air comprimé à la section de liaison (54) et maintiennent en état de désaération le cylindre de frein à ressort accumulateur (26), à l'aide de l'autre élément à soupapes (87).

4. Installation de freinage selon la revendication 1, du type dans laquelle la soupape de commande (14) à deux conduites, de la remorque, comporte des pistons de commande (55, 56) chargés par les circuits à air comprimé (8, 9) des cylindres de frein et un système à pistons (61) chargé par la pression qui règne dans la source à air comprimé (3), à l'encontre d'une pression ajustée par l'organe de commande (33; 33') du frein auxiliaire et de la pression qui règne dans une conduite de freinage (16) de la remorque, en vue de la commande d'une soupape (59, 66, 67) ajustant la pression de la conduite de freinage (16) de la remorque, caractérisée par le fait qu'il est prévu un piston de retenue (77) chargé par la pression qui règne dans la source à air comprimé (3), à l'encontre de la pression qui règne dans le cylindre de frein à ressort accumulateur (26), lequel piston de retenue arme un ressort (80) qui charge la soupape (59, 66, 67) dans le sens de commutation qui correspond à la désaération de la conduite de frein (16) de la remorque, dans le cas où ladite charge mentionnée en premier lieu, est prépondérante.

5. Installation de freinage selon la revendication 4, caractérisée par le fait que le ressort (80) est monté entre le piston de retenue (77) et une cuvette de ressort (79) susceptible d'être accouplée au système à pistons (61) à l'aide d'une butée (81).

6. Installation de freinage selon la revendication 5, caractérisée par le fait que la butée (8) est chargée par un ressort de dégagement (82) plus faible que le ressort (80).

Fig.1

Fig.5

EP 0 268 045 B1

# Fig.2

# Fig.3

# Fig.4